# EUROPÄISCHE PATENTSCHRIFT

(11) **EP 2 753 815 B1**
(45) Veröffentlichungstag und Bekanntmachung des Hinweises auf die Patenterteilung: **25.03.2015**
(21) Anmeldenummer: 12772079.5
(22) Anmeldetag: 10.09.2012
(51) Int. Cl.: F28D 21/00, F02M 25/07

(54) **ABGASKÜHLER FÜR EIN ABGASRÜCKFÜHRSYSTEM SOWIE EIN ABGASRÜCKFÜHRSYSTEM MIT EINEM DERARTIGEN ABGASKÜHLER**
EXHAUST GAS COOLER FOR AN EXHAUST GAS RECIRCULATION SYSTEM, AND AN EXHAUST GAS RECIRCULATION SYSTEM WITH SUCH AN EXHAUST GAS COOLER
REFROIDISSEUR EGR POUR UN SYSTÈME DE RECIRCULATION DES GAZ D'ÉCHAPPEMENT ET SYSTÈME DE RECIRCULATION DES GAZ D'ÉCHAPPEMENT DOTÉ D'UN REFROIDISSEUR EGR DE CE TYPE

(30) Priorität: 08.09.2011 DE 102011082381; 25.10.2011 DE 102011085194
(43) Veröffentlichungstag der Anmeldung: 16.07.2014
(73) Patentinhaber: Halla Visteon Climate Control Corporation, Daedeok-gu Daejeon-si (KR)
(72) Erfinder: TISCHER, Marcel, 01159 Dresden (DE)
(74) Vertreter: Flügel Preissner Kastel Schober
(86) Internationale Anmeldenummer: PCT/EP2012/067676
(87) Internationale Veröffentlichungsnummer: WO 2013/034774

(56) Entgegenhaltungen:
- WO-A1-2009/044947
- DE-A1-102006 052 972
- GB-A- 2 473 821

## Beschreibung

Die Erfindung betrifft einen Abgaskühler für ein Abgasrückführsystem nach dem Oberbegriff des Anspruchs 1, sowie ein Abgasrückführsystem mit einem derartigen Abgaskühler.

Auf dem Gebiet der Motortechnik ist es seit längerem zur Vermeidung von Schadstoffemissionen bekannt, das Abgas teilweise auf der Frischluftseite dem Motor zurückzuführen. Hierbei ist es in Abhängigkeit von dem Betriebszustand des Motors erforderlich, das Abgas zu kühlen. Gleichzeitig kann insbesondere bei niedriger Motortemperatur und/oder niedriger Motorlast eine Kühlung des Abgases unerwünscht sein. Zu diesem Zweck ist meist ein Bypass vorgesehen, der den Kühler umgeht, wobei durch eine geeignete Ventileinstellung geregelt werden kann, inwieweit das Abgas durch den Bypass beziehungsweise den Kühler strömt.

Ein derartiger Kühler ist aus der EP 1 277 945 A1 bekannt. Der Kühler weist ein Gehäuse mit Anschlüssen zur Zu- und Abführung eines Kühlmittels auf. Ferner ist ein Bypassrohr vorgesehen, das den Kühler derart umgeht, dass das zurückgeführte Abgas zumindest teilweise durch das Bypassrohr strömt und nicht gekühlt wird.

Ein Abgaskühler für ein Abgasrückführsystem nach dem Oberbegriff des Anspruchs 1, das bei Kraftfahrzeugen Anwendung findet, ist aus DE 10 2006 052 972 A1 bekannt. Der Abgaskühler umfasst einen Kühlerabschnitt, der wenigstens einen Kühlkanal und wenigstens einen Zusatzkanal aufweist. Der Abgaskühler umfasst ferner wenigstens einen Bypass, der den Kühlerabschnitt überbrückt, und eine Abgasleitvorrichtung sowie ein Verschlusselement. Der Kühlkanal weist eine erste Kühlleistung und einen ersten Druckverlustbeiwert auf. Der Zusatzkanal weist eine zweite Kühlleistung und einen zweiten Druckverlustbeiwert auf. Die erste Kühlleistung ist höher als die zweite Kühlleistung, und der erste Druckverlustbeiwert ist höher als der zweite Druckverlustbeiwert.

Abgasrückführsysteme, die bei Kraftfahrzeugen Anwendung finden, sind zudem aus GB 2 473 821 A und WO 2009/044947 A1 bekannt.

Der Erfindung liegt die Aufgabe zugrunde, einen Abgaskühler für ein Abgasrückführsystem zu schaffen, das um einen weiteren Betriebspunkt erweitert ist.

Zur Lösung dieser Aufgabe wird ein Abgaskühler gemäß Anspruch 1 und ein Abgasrückführsystem gemäß Anspruch 11 vorgeschlagen. Besondere Ausgestaltungen des erfindungsgemäßen Abgaskühlers sind in den Ansprüchen 2 bis 10 beschrieben.

Der erfindungsgemäße Abgaskühler für ein Abgasrückführsystem, insbesondere eines Kraftfahrzeuges, weist eine Gesamtkühlleistung und einen Gesamtdruckverlustbeiwert auf. Der Abgaskühler umfasst wenigstens einen Kühlerabschnitt, der wenigstens einen Kühlkanal und wenigstens einen Zusatzkanal aufweist, wenigstens einen Bypass, der zumindest einen der Kühlerabschnitte überbrückt und eine Abgasleitvorrichtung, die wenigstens ein Verschlusselement aufweist. Der Kühlkanal weist eine erste Kühlleistung und einen ersten Druckverlustbeiwert und der Zusatzkanal eine zweite Kühlleistung und einen zweiten Druckverlustbeiwert auf. Die erste Kühlleistung ist höher als die zweite Kühlleistung und/oder der erste Druckverlustbeiwert ist höher als der zweite Druckverlustbeiwert. Das Verschlusselement ist geeignet, zur Erhöhung der Gesamtkühlleistung und/oder des Gesamtdruckverlustbeiwerts den Durchfluss von Abgasen im Zusatzkanal zumindest annähernd zu verhindern.

Diese Ausgestaltung bietet den Vorteil, dass ein weiterer, dritter Betriebspunkt bereitgestellt wird, der, sollte - beispielsweise in einem weiteren Absatzmarkt - kein Bedarf für einen solchen dritten Betriebspunkt bestehen, leicht entfernt werden kann, indem die Abgasleitvorrichtung im Sinne des Anspruchs 1 durch eine herkömmliche Abgasleitvorrichtung, beispielsweise einem Standardumlenkkrümmer, ersetzt wird. Die ersten beiden Betriebspunkte bleiben von einem solchen Austausch unberührt. Auf den Einsatz eines Vorkühlers kann verzichtet werden. Dadurch ist eine leichte und kompakte Bauweise des Abgaskühlers möglich.

Eine höhere Kühlleistung bewirkt eine niedrigere Austrittstemperatur des zu kühlenden Abgases bei gleichbleibender Eintrittstemperatur. Der Druckverlustbeiwert sagt etwas darüber aus, welcher Druckunterschied zwischen Zuund Abströmung vorliegen muss, um einen bestimmen Durchfluss durch das Bauteil aufrechtzuerhalten.

Vorzugsweise weist die Abgasleitvorrichtung wenigstens zwei parallel verlaufende Leitungen, die unabhängig voneinander mit Abgasen durchströmt werden können, auf, wobei eine erste Leitung mit dem Kühlkanal und die zweite Leitung mit dem Zusatzkanal verbunden ist und wobei das Verschlusselement in der zweiten Leitung angeordnet ist. Vorzugsweise sind die erste Leitung und die zweite Leitung durch eine Wandung voneinander getrennt.

Diese Ausgestaltung bietet den Vorteil, dass das Öffnen und schließen des Verschlusselements keinen Einfluss auf den Strömungsraum der zweiten Leitung ausübt, wodurch der Druckverlustbeiwert des Kühlerabschnitts von einem Öffnen oder Schließen des Verschlusselements unverändert bleibt. Diese Ausgestaltung bietet den weiteren Vorteil, dass die der Abgasleitvorrichtung von dem Kühlkanal zugeführten Abgase - unabhängig von den durch den Zusatzkanal zugeführten Abgasen - dem Kühlkanal eines weiteren Kühlerabschnitts zugeführt werden kann.

Vorzugsweise kann das Verschlusselement als Klappe oder als Ventil ausgebildet sein. Weiterhin vorzugsweise ist das Verschlusselement als Hubventil ausgestaltet.

In einer bevorzugten Ausgestaltung umfasst der Abgaskühler zwei Kühlerabschnitte, die durch die Abgasleitvorrichtung miteinander verbunden sind.

Weist die Abgasleitvorrichtung wenigstens zwei parallel verlaufende Leitungen, die unabhängig voneinander mit Abgasen durchströmt werden können, auf, wobei das Verschlusselement innerhalb der zweiten Leitung angeordnet ist, und wird die zweite Leitung über den Zusatzkanal des ersten Kühlerabschnitts mit Abgasen versorgt, die an einen Zusatzkanal eines zweiten Kühlerabschnitts weitergeleitet werden, so ist die Ausgestaltung mit zwei Kühlerabschnitten besonders von Vorteil. Demnach bewirkt das Schließen des Verschlusselements, dass der Durchfluss an Abgasen im Zusatzkanal des ersten Kühlerabschnitts, der der Abgasleitvorrichtung vorgeschaltet ist, sowie im Zusatzkanal des zweiten Kühlerabschnitts, der der Abgasleitvorrichtung nachgeschaltet ist, zugleich unterbrochen wird.

In einer bevorzugten Ausgestaltung des Abgaskühlers sind die Kühlabschnitte zur Bildung einer Verbindungsfläche, an welcher die Abgasleitvorrichtung anliegt, bündig zueinander angeordnet.

Diese Ausgestaltung bietet den Vorteil, dass die Abgasleitvorrichtung leicht zwischen zwei Kühlabschnitten angebracht werden kann. Ebenso ermöglicht diese Ausgestaltung, dass die Abgasleitvorrichtung, je nach Bedarf, durch einen einfacheren Umlenkkrümmer ersetzt werden kann, um den dritten Betriebspunkt zu deaktivieren. Zweckmäßigerweise ist der Abgaskühler als U-Kühler ausgebildet.

Alternativ kann der Kühler auch als I-Kühler ausgebildet sein.

Vorzugsweise ist der Abgaskühler dadurch gekennzeichnet, dass das Verschlusselement den Zusatzkanal wenigstens eines Kühlabschnittes verschließt.

Diese Ausgestaltung hat als technische Wirkung zur Folge, dass der Durchfluss des Abgases durch den Zusatzkanal verhindert wird, unabhängig davon, ob das Verschlusselement auf der stromab- oder -aufwärtigen Seite des Kühlabschnittes angeordnet ist.

Bevorzugt ist der Abgaskühler durch eine Einströmrichtung und eine Ausströmrichtung gekennzeichnet, wobei die Einströmrichtung annähernd parallel zu und weiterhin vorzugsweise in entgegengesetzter Richtung von der Ausströmrichtung verläuft.

Vorzugsweise ist der Kühlkanal mit einem Kühlelement versehen, das vorzugsweise wellenförmig ausgebildet ist und das sich weiterhin vorzugsweise über die gesamte Länge des Kühlkanals erstreckt. Das Kühlelement kann auch als Turbulator bezeichnet werden. Vorzugsweise kann das Kühlelement auch als "Wellfin" oder "Winlet" bezeichnet werden. Vorzugsweise ist das Kühlelement geeignet, das den Kühlkanal durchströmende Abgas zu verwirbeln.

Diese Ausgestaltung bietet eine verbesserte Kühlleistung der Kühlkanäle. Weiterhin kann durch diese Ausgestaltung ein Zusatzkanal in einen Kühlkanal umgewandelt werden, indem ein weiteres Kühlelement in diesen eingebracht wird. Umgekehrt kann ein Kühlkanal durch Entfernen des Kühlelements zu einem weiteren Zusatzkanal umgewandelt werden. Diese modulare Ausgestaltung bietet den Vorteil, dass ohne weiteren Konstruktionsaufwand unterschiedliche Betriebspunkte mit unterschiedlichen Kühlleistungen nach Bedarf bereitgestellt werden können, ohne dass die allgemeine Ausgestaltung des Kühlabschnittes geändert werden muss. Lediglich die Abgasleitvorrichtung, insbesondere das Verschlusselement, müsste entsprechend angepasst werden.

Vorzugsweise weisen der Kühlkanal und der Zusatzkanal im Wesentlichen den gleichen Querschnitt auf. Durch diese Ausgestaltung können Kühlkanäle zu Zusatzkanälen umgewandelt werden und umgekehrt.

In einer bevorzugten Ausgestaltung ist der Querschnitt über die gesamte Länge des Kühlkanals und/oder des Zusatzkanals annähernd konstant. Da der Druckverlust, der durch einen Kühlkanal oder einen Zusatzkanal bedingt ist, in Abhängigkeit des Querschnitts des durchströmten Bauteils ermittelt werden kann, erleichtert ein konstanter Querschnitt die Berechnung der Länge, die erforderlich ist, um einen gewünschten Druckverlust zu erzielen.

Vorzugsweise ist der Querschnitt annähernd rechteckförmig ausgebildet. Vorzugsweise weist der Querschnitt eine Form eines Langlochs auf.

Das erfindungsgemäße Abgasrückführsystem umfasst einen erfindungsgemäßen Abgaskühler.

Einzelheiten und weitere Vorteile des erfindungsgemäßen Abgaskühlers und des erfindungsgemäßen Abgasrückführsystems ergeben sich aus den nachfolgend beschriebenen bevorzugten Ausführungsbeispielen. In den die Ausführungsbeispiele lediglich schematisch darstellenden Zeichnungen veranschaulichen im Einzelnen:
- Fig. 1:: eine schematische Ansicht des erfindungsgemäßen Abgaskühlers nach einem ersten Ausführungsbeispiel;
- Fig. 1a:: eine Detailansicht eines Kühlerabschnitts des erfindungsgemäßen Abgaskühlers nach dem ersten Ausführungsbeispiel;

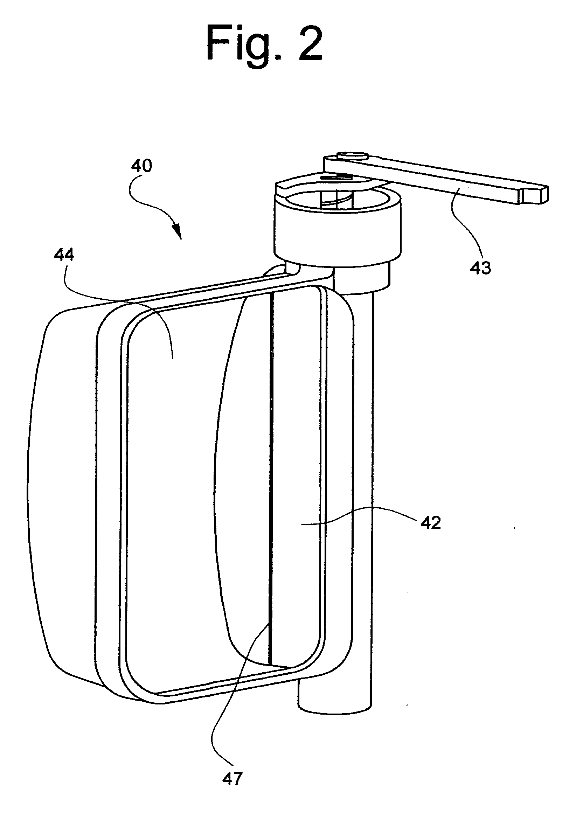

- Fig. 2:: eine schematische Ansicht der Abgasleitvorrichtung des erfindungsgemäßen Abgaskühlers nach dem ersten Ausführungsbeispiel;
- Fig. 3:: einen quer zur Einström- und Ausströmrichtung verlaufenden Querschnitt des erfindungsgemäßen Abgaskühlers nach dem ersten Ausführungsbeispiel;
- Fig. 4:: einen quer zur Einström- und Ausströmrichtung verlaufenden Querschnitt des erfindungsgemäßen Abgaskühlers nach einem zweiten Ausführungsbeispiel bei einer geöffneten Stellung des Verschlusselements;
- Fig. 5:: einen quer zur Einström- und Ausströmrichtung verlaufenden Querschnitt des erfindungsgemäßen Abgaskühlers nach einem zweiten Ausführungsbeispiel bei einer geschlossenen Stellung des Verschlusselements.

Der erfindungsgemäße Abgaskühler 10 umfasst wenigstens einen Kühlerabschnitt 20, 20', wenigstens einen Bypass (nicht in den Figuren wiedergegeben) und eine Abgasleitvorrichtung 40.

In beiden, in den Figuren wiedergegebenen Ausführungsbeispielen setzt sich der Abgaskühler 10 aus zwei Kühlerabschnitten 20, 20' zusammen, die mittels einer Abgasleitvorrichtung 40 miteinander verbunden sind. Die Abgasleitvorrichtung 40 ist zwischen dem ersten Kühlerabschnitt 20 und dem zweiten Kühlerabschnitt 20' angeordnet. Die zu kühlenden Abgase treten in einer Einströmrichtung E in den ersten Kühlerabschnitt 20 ein und treten in einer Ausströmrichtung A aus dem zweiten Kühlerabschnitt 20' aus. Die Abgasleitvorrichtung 40 kehrt vorzugsweise die Strömungsrichtung des Abgases um. Somit lässt sich der Abgaskühler 10 als sogenannter U-Kühler ausgestalten, der in einer besonders platzsparenden Weise hergestellt werden kann.

Die Abgasleitvorrichtung 40 weist ein Verschlusselement 42 auf, das mittels des Betätigungselements 43 betätigbar ist.

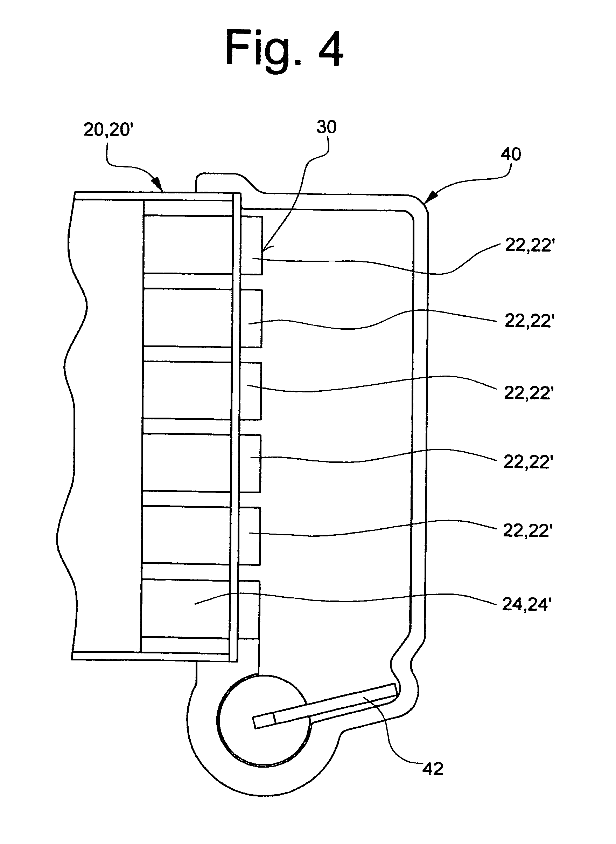

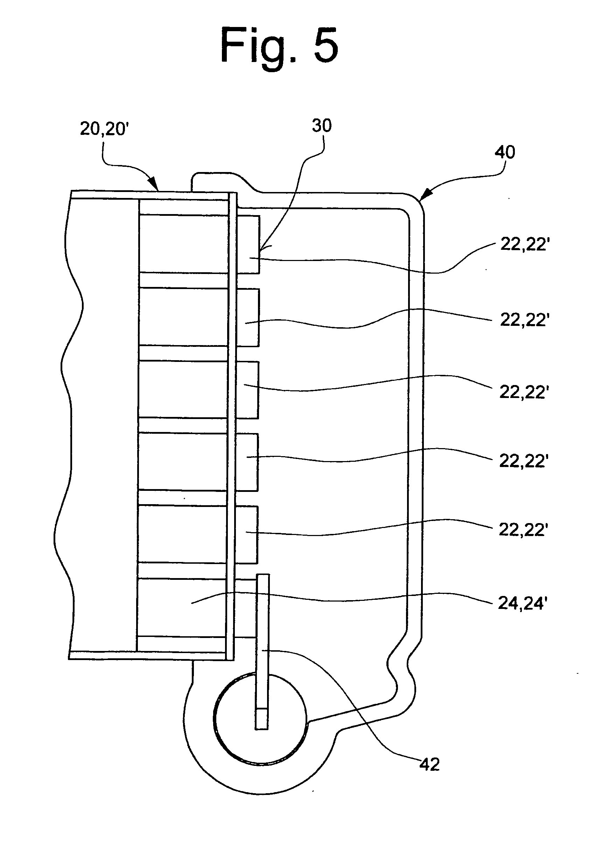

Das Verschlusselement 42 ist geeignet, den Durchfluss an Abgasen durch wenigstens einen Zusatzkanal 24, 24' eines Kühlerabschnitts 20, 20' zu verschließen. Bevorzugterweise verschließt das Verschlusselement 42 den Zusatzkanal 24, 24' beider Kühlerabschnitte 20, 20', wie insbesondere die Fig. 4 und 5 des zweiten Ausführungsbeispiels wiedergeben.

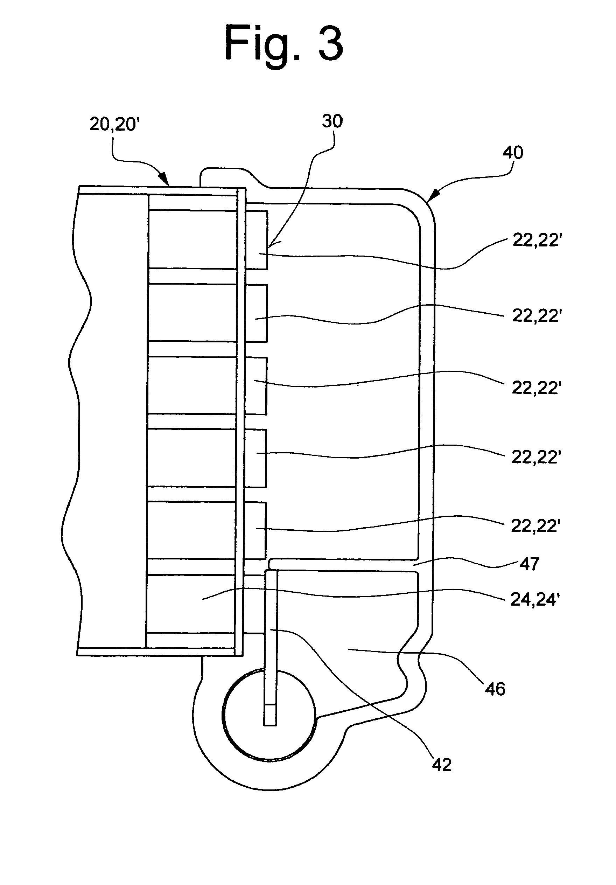

In einer Ausgestaltung umfasst die Abgasleitvorrichtung 40 eine Wandung 47, die diese in eine erste Leitung 44 und eine zweite Leitung 46 aufteilt. In dieser Ausgestaltung des Abgaskühlers 10 verdeckt das Verschlusselement 42 lediglich den Zusatzkanal 24, 24' wenigstens eines der beiden Kühlerabschnitte 20, 20'. Durch die Trennung beider Leitungen 44, 46 voneinander genügt es, die Leitung 46 entweder an deren Eingang oder an deren Ausgang zu verschließen. Wie insbesondere die Fig. 3 zu erkennen gibt, sind die zwei Leitungen 44, 46 mittels der Wandung 47 gebildet.

In dem in den Fig. 4 und 5 wiedergegebenen Ausführungsbeispiel ist die Wandung 47 nicht vorgesehen. Dementsprechend verschließt das Verschlusselement 42 der zwischen zwei Kühlerabschnitten 20, 20' angeordneten Abgasleitvorrichtung 40 den Ausgang des Zusatzkanals 24 des ersten Kühlerabschnitts 20 und zugleich den Eingang des Zusatzkanals 24' des zweiten Kühlerabschnittes 20'.

Die Abgasleitvorrichtung 40 liegt in Strömungsrichtung des Abgases zwischen dem ersten Kühlerabschnitt 20 und dem zweiten Kühlerabschnitt 20'. Die Fläche, die eine Austrittsöffnung des ersten Kühlerabschnitts 20 bildet, und die Fläche, die eine Lufteintrittsöffnung des zweiten Kühlerabschnitts 20' bildet, bilden zusammen eine Verbindungsfläche 30, entlang welcher die Abgasleitvorrichtung 40 angeordnet ist. Durch diese Ausgestaltung lässt sich die Abgasleitvorrichtung 40 in einfacher Weise zwischen dem ersten Kühlerabschnitt 20 und dem zweiten Kühlerabschnitt 20' anordnen, indem diese auf die Verbindungsfläche 30 aufgesetzt wird.

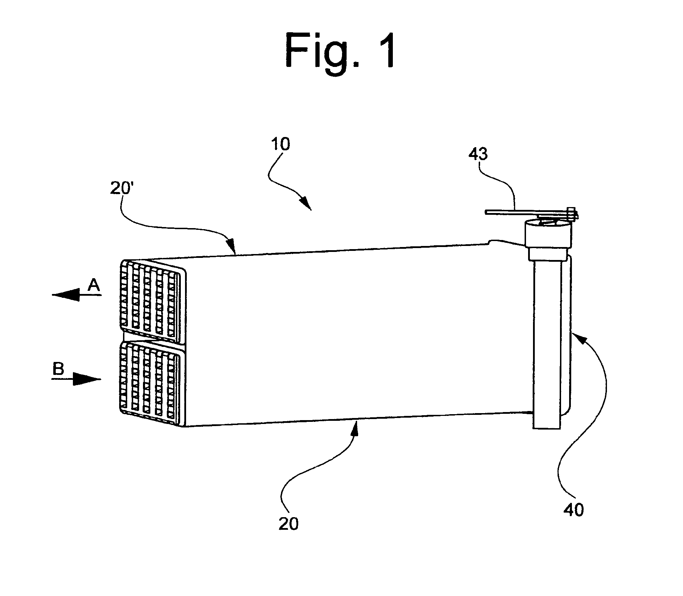

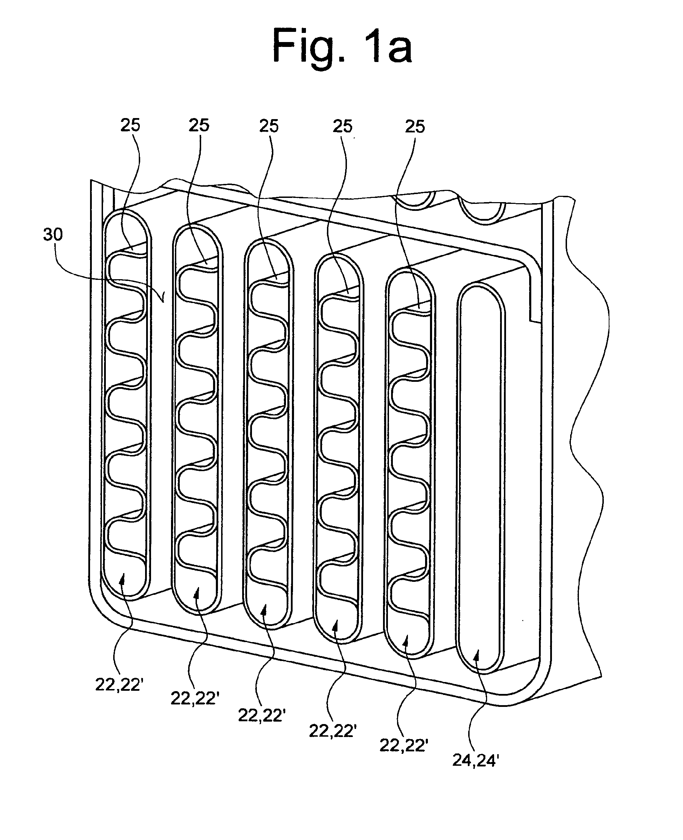

Wie insbesondere die Fig. 1 a zu erkennen gibt, umfasst der Kühlerabschnitt 20, 20' in den wiedergegebenen Ausführungsbeispielen jeweils fünf Kühlkanäle 22, 22' und einen Zusatzkanal 24, 24'. In den fünf Kühlkanälen 22, 22' ist jeweils ein Kühlelement 25 vorgesehen, das das Abgas, welches die Kühlkanäle 22, 22' durchströmt, verwirbelt, wodurch die Kühlleistung der Kühlkanäle 22, 22' erhöht wird. In beiden in den Figuren wiedergegebenen Ausführungsbeispielen unterscheiden sich die Kühlkanäle 22, 22' von den Zusatzkanälen 24, 24' alleine durch das Vorhandensein oder das Nichtvorhandensein eines Kühlelements 25. Der Querschnitt der Kühlkanäle 22, 22' und der Zusatzkanäle 24, 24' ist ansonsten gleich. Wie insbesondere Fig. 1 a zeigt, weisen die Kühlkanäle 22, 22' und die Zusatzkanäle 24, 24' im Wesentlichen einen Querschnitt auf, der annähernd rechteckförmig ist, und vorzugsweise die Form eines Langlochs aufweist.

Diese Ausgestaltung des Abgaskühlers 10 ermöglicht es, dass, in variabler Weise, Kühlkanäle 22, 22' in Zusatzkanäle 24, 24' umgewandelt werden können, indem das entsprechende Kühlelement 25 aus dem Kühlkanal 22, 22' entfernt wird. Umgekehrt kann der Zusatzkanal 24, 24' in einen Kühlkanal 22, 22' umgewandelt werden, indem ein Kühlelement 25 in den Zusatzkanal eingebracht wird. Somit lässt sich durch die Variierung der Anzahl der als Zusatzkanal 24, 24' verwendeten Kanäle 22, 22', 24, 24' der Abgaskühler 10 auf unterschiedliche Betriebspunkte einstellen.

Der Abgaskühler 10 wird vorteilhafterweise insbesondere dann verwendet, wenn der Abgaskühler 10 in einem Kraftfahrzeug verbaut ist, das für unterschiedliche Absatzmärkte mit unterschiedlichen Anforderungen an den Abgaskühler 10 vorgesehen ist. Dann werden die Kühlkanäle 22, 22' und die Zusatzkanäle 24, 24' sowie die Länge der Kühlerabschnitte 20, 20' insgesamt derart gewählt, dass, wenn die Kühlerabschnitte 20, 20' anstatt mit einer Abgasleitvorrichtung 40 im Sinne des Anspruchs 1 mit einem StandardUmlenkkrümmer verbunden werden (inklusive des durch das Bypassrohr bereitgestellten Betriebspunkts) zwei Betriebspunkte bereitgestellt werden, die den Anforderungen eines der Absatzmärkte genügen. Wird nun, auf einem weiteren Absatzmarkt, ein zusätzlicher Betriebspunkt gewünscht, der eine höhere Kühlleistung ermöglicht, wird die Standardumlenkvorrichtung durch eine Abgasleitvorrichtung 40 ersetzt, wodurch in einfacher Weise der dritte Betriebspunkt bereitgestellt wird.

In einer beispielhaften Verwendung des Abgaskühlers 10 wird diesem 100 kg Abgas pro Stunde bei einer Temperatur von 450°C zugeführt. Die Temperatur der nach außen gerichteten Oberfläche des Kühlers beträgt 95°C. Wird der Abgaskühler 10 bei geöffnetem Verschlusselement 42 (Betriebspunkt 2) betrieben, so wird ein Druckverlust von 27,5 mbar erzielt bei einer Austrittstemperatur des Abgases von 201 °C. Bei geschlossenem Verschlusselement 42 (Betriebspunkt 3) wird hingegen ein Druckverlust von 53 mbar erzielt, und die Austrittstemperatur beträgt nur noch 174°C. Somit ist die Gesamtkühlleistung P_{G} bei geöffnetem Verschlusselement 42 deutlich geringer als bei geschlossenem Verschlusselement 42.

**Bezugszeichenliste**

| | | | |
|---|---|---|---|
| 10 | Abgaskühler | | |
| | | D_{G} | Gesamtdruckverlustbeiwert |
| 20 | Kühlerabschnitt | D₁ | Druckverlustbeiwert |
| 20' | Kühlerabschnitt | D₂ | Druckverlustbeiwert |
| 22 | Kühlkanal | | |
| 22' | Kühlkanal | | |
| 24 | Zusatzkanal | | |
| 24' | Zusatzkanal | | |
| 25 | Kühlelement | | |
| | | | |
| 30 | Verbindungsfläche | | |
| | | | |
| 40 | Abgasleitvorrichtung | | |
| 42 | Verschlusselement | | |
| 43 | Betätigungselement | | |
| 44 | Leitung | | |
| 46 | Leitung | | |
| 47 | Wandung | | |
| | | | |
| E | Einströmrichtung | | |
| A | Ausströmrichtung | | |
| | | | |
| P_{G} | Gesamtkühlleistung | | |
| P₁ | Kühlleistung | | |
| P₂ | Kühlleistung | | |

## Patentansprüche

1. Abgaskühler für ein Abgasrückführsystem, insbesondere eines Kraftfahrzeuges, das eine Gesamtkühlleistung (P_{G}) und einen Gesamtdruckverlustbeiwert (D_{G}) aufweist, umfassend:
wenigstens einen Kühlerabschnitt (20, 20'), der wenigstens einen Kühlkanal (22, 22') und wenigstens einen Zusatzkanal (24, 24') aufweist;
wenigstens einen Bypass, der zumindest einen der Kühlerabschnitte (20, 20') überbrückt und
eine Abgasleitvorrichtung (40), ein Verschlusselement (42);
wobei der wenigstens eine Kühlkanal (22, 22') eine erste Kühlleistung (P₁) und einen ersten Druckverlustbeiwert (D₁) und der wenigstens eine ZusatzKanal (24, 24') eine zweite Kühlleistung (P₂) und einen zweiten Druckverlustbeiwert (D₂) aufweist,
wobei die erste Kühlleistung (P₁) höher als die zweite Kühlleistung (P₂) ist und der erste Druckverlustbeiwert (D₁) höher als der zweite Druckverlustbeiwert (D₂) ist, **dadurch gekennzeichnet daß**, die obengenannte Abgasleitvorrichtung (40) das Verschlusselement (42) aufweist, und daß
sich die Gesamtkühlleistung (P_{G}) und der Gesamtdruckverlustbeiwerts (D_{G}) erhöhen, wenn das Verschlusselement (42) den Durchfluss von Abgasen im wenigstens einen Zusatzkanal (24, 24') zumindest annähernd verhindert.

2. Abgaskühler nach Anspruch 1, **dadurch gekennzeichnet,** dass die Abgasleitvorrichtung (40) wenigstens zwei parallel verlaufende Leitungen (44, 46), die unabhängig voneinander mit Abgasen durchströmt werden können, aufweist, wobei eine erste Leitung (44) mit dem Kühlkanal (22, 22') und die zweite Leitung (46) mit dem Zusatzkanal (24, 24') verbunden ist und wobei das Verschlusselement (42) in der zweiten Leitung (46) angeordnet ist.

3. Abgaskühler nach Anspruch 1 oder 2, **gekennzeichnet durch** zwei Kühlerabschnitte (20, 20'), die durch die Abgasleitvorrichtung (40) miteinander verbunden sind.

4. Abgaskühler nach Anspruch 3, **dadurch gekennzeichnet,** dass die Kühlabschnitte (20, 20') zur Bildung einer Verbindungsfläche (30), an welcher die Abgasleitvorrichtung (40) anliegt, bündig zueinander angeordnet sind.

5. Abgaskühler nach einem der Ansprüche 1 bis 4, **dadurch gekennzeichnet,** dass das Verschlusselement (42) den Zusatzkanal (24, 24') wenigstens eines Kühlabschnittes (20, 20') verschließt.

6. Abgaskühler nach einem der Ansprüche 1 bis 5, **gekennzeichnet durch** eine Einströmrichtung (E) und eine Ausströmrichtung (A), wobei die Einströmrichtung (E) annähernd parallel zu und weiterhin vorzugsweise in entgegengesetzter Richtung von der Ausströmrichtung (A) verläuft.

7. Abgaskühler nach einem der Ansprüche 1 bis 6, **dadurch gekennzeichnet,** dass der Kühlkanal (22, 22') mit einem Kühlelement (25) versehen ist, das vorzugsweise wellenförmig ausgebildet ist und das sich weiterhin vorzugsweise über die gesamte Länge des Kühlkanals (22, 22') erstreckt.

8. Abgaskühler nach einem der Ansprüche 1 bis 7, **dadurch gekennzeichnet,** dass der Kühlkanal (22, 22') und der Zusatzkanal (24, 24') im Wesentlichen den gleichen Querschnitt aufweisen.

9. Abgaskühler nach Anspruch 8, **dadurch gekennzeichnet,** dass der Querschnitt über die gesamte Länge des Kühlkanals (22, 22') und/oder des Zusatzkanals (24, 24') annähernd konstant ist.

10. Abgaskühler nach Anspruch 8 oder 9, **dadurch gekennzeichnet,** dass der Querschnitt annähernd rechteckförmig ausgebildet ist.

11. Abgasrückführsystem umfassend einen Abgaskühler nach einem der Ansprüche 1 bis 10.

## Claims

1. Exhaust gas cooler for an exhaust gas recirculation system, particularly of a motor vehicle, having a total cooling power (P_{G}) and a total pressure loss coefficient (D_{G}), comprising:
at least one cooling portion (20, 20') having at least one cooling duct (22, 22') and at least one additional duct (24, 24');
at least one bypass bypassing one of the at least one cooling portion (20, 20');
an exhaust gas routing device (40); and
a closing member (42);
the at least one cooling duct (22, 22') having a first cooling power (P₁) and a first pressure loss coefficient (D₁), and the at least one additional duct (24, 24') having a second cooling power (P₂) and a second pressure loss coefficient (D₂);
the first cooling power (P₁) being greater than the second cooling power (P₂) and the first pressure loss coefficient (D₁) being greater than the second pressure loss coefficient (D2);
**characterized in that** the above mentioned exhaust gas routing device (40) comprising the closing member (42); and
that the total cooling power (P_{G}) coefficient and the total pressure loss coefficient (D_{G}) increase, when the closing member (42) nearly prevents flowing of the exhaust gas in the at least one additional duct (24, 24').

2. Exhaust gas cooler according to claim 1, **characterized in that** the exhaust gas routing device (40) has at least two conduits (44, 46) running in parallel and suitable to be independently flowed through by exhaust gas, wherein a first conduit (44) is connected to the cooling duct (22, 22') and the second conduit (46) is connected to the additional duct (24, 24'), and wherein the closing member (42) is disposed within the second conduit (46).

3. Exhaust gas cooler according to claim 1 or 2, **characterized by** two cooling portions (20, 20') connected via the exhaust gas routing device (40).

4. Exhaust gas cooler according to claim 3, **characterized in that** the cooling portions (20, 20') are flush in order to form a connecting surface (30) engaging the exhaust gas routing device (40).

5. Exhaust gas cooler according to any one of the claims 1 to 4, **characterized in that** the closing member (42) closes the additional duct (24, 24') of at least one cooling portion (20, 20').

6. Exhaust gas cooler according to any one of the claims 1 to 5, **characterized by** an inflow direction (E) and an outflow direction (A), the inflow direction (E) running approximately in parallel to and preferably extending in opposite direction to the outflow direction (A).

7. Exhaust gas cooler according to any one of the claims 1 to 6, **characterized in that** the cooling duct (22, 22') is provided with a cooling member (25), preferably being formed wavelike and further preferably extending over the whole length of the cooling duct (22, 22').

8. Exhaust gas cooler according to any one of the claims 1 to 7, **characterized in that** the cooling duct (22, 22') and the additional duct (24, 24') substantially have the same cross-section.

9. Exhaust gas cooler according to claim 8, **characterized in that** the cross-section is approximately constant over the whole length of the cooling duct (22, 22') and/or the additional duct (24, 24').

10. Exhaust gas cooler according to claim 8 or 9, **characterized in that** the cross-section is substantially rectangular.

11. Exhaust gas recirculation system comprising an exhaust gas cooler according to any one of the claims 1 to 10.

## Revendications

1. Refroidisseur de gaz d'échappement pour un système de recirculation de gaz d'échappement, en particulier d'un véhicule, qui présente une puissance de refroidissement totale (PG) et un coefficient de perte de pression total (DG), comprenant :
au moins une portion de refroidisseur (20, 20'), qui comporte au moins un canal de refroidissement (22, 22') et au moins un canal supplémentaire (24, 24') ;
au moins un by-pass, qui contourne l'une au moins des portions de refroidisseur (20, 20') ;
un dispositif de guidage de gaz d'échappement (40) et un élément d'obturation (42) ;
dans lequel ledit au moins un canal de refroidissement (22, 22') présente une première puissance de refroidissement (P1) et un premier coefficient de perte de pression (D1) et ledit au moins un canal supplémentaire (24, 24') présente une seconde puissance de refroidissement (P2) et un second coefficient de perte de pression (D2),
dans lequel la première puissance de refroidissement (P1) est plus élevée que la seconde puissance de refroidissement (P2), et le premier coefficient de perte de pression (D1) est plus élevé que le second coefficient de perte de pression (D2),
**caractérisé en ce que**
ledit dispositif de guidage de gaz d'échappement (40) comporte l'élément d'obturation (42), et en ce que
la puissance de refroidissement totale (PG) et le coefficient de perte de pression total (DG) augmentent quand l'élément d'obturation (42) empêche au moins approximativement la traversée de gaz d'échappement dans ledit au moins un canal supplémentaire (24, 24').

2. Refroidisseur de gaz d'échappement selon la revendication 1, **caractérisé en ce que** le dispositif de guidage de gaz d'échappement (40) comprend au moins deux conduits (44, 46) s'étendant parallèlement, qui peuvent être traversés par des gaz d'échappement indépendamment l'un de l'autre, dans lesquels un premier conduit (44) est relié audit au moins un canal de refroidissement (22, 22') et le second conduit (46) est relié audit au moins un canal supplémentaire (24, 24'), et dans lequel l'élément d'obturation (42) est agencé dans le second conduit (46).

3. Refroidisseur de gaz d'échappement selon la revendication 1 ou 2, **caractérisé par** deux portions de refroidisseur (20, 20'), qui sont reliées l'une à l'autre par le dispositif de guidage de gaz d'échappement (40).

4. Refroidisseur de gaz d'échappement selon la revendication 3, **caractérisé en ce que**, pour constituer une surface de liaison (30) sur laquelle s'applique le dispositif de guidage de gaz d'échappement (40), les portions de refroidisseur (20, 20') sont agencées en affleurement l'une par rapport à l'autre.

5. Refroidisseur de gaz d'échappement selon l'une des revendications 1 à 4, **caractérisé en ce que** l'élément d'obturation (42) obture ledit au moins un canal supplémentaire (24, 24') d'au moins une portion de refroidisseur (20, 20').

6. Refroidisseur de gaz d'échappement selon l'une des revendications 1 à 5, **caractérisé par** une direction d'écoulement entrant (E) et une direction d'écoulement sortant (A), dans lequel la direction d'écoulement entrant (E) s'étend approximativement parallèlement à la direction d'écoulement sortant (A), et de préférence en sens opposé.

7. Refroidisseur de gaz d'échappement selon l'une des revendications 1 à 6, **caractérisé en ce que** ledit au moins un canal de refroidissement (22, 22') est pourvu d'un élément de refroidissement (25) qui est réalisé de préférence sous forme ondulée, et qui s'étend en outre de préférence sur la totalité de la longueur dudit au moins un canal de refroidissement (22, 22').

8. Refroidisseur de gaz d'échappement selon l'une des revendications 1 à 7, **caractérisé en ce que** ledit au moins un canal de refroidissement (22, 22') et ledit au moins un canal supplémentaire (24, 24') présentent sensiblement la même section transversale.

9. Refroidisseur de gaz d'échappement selon la revendication 8, **caractérisé en ce que** la section transversale est approximativement constante sur la totalité de la longueur dudit au moins un canal de refroidissement (22, 22') et/ou dudit au moins un canal supplémentaire (24, 24').

10. Refroidisseur de gaz d'échappement selon la revendication 8 ou 9, **caractérisé en ce que** la section transversale est réalisée approximativement sous forme rectangulaire.

11. Système de recirculation de gaz d'échappement comprenant un refroidisseur de gaz d'échappement selon l'une des revendications 1 à 10.
